(19) Europäisches Patentamt
European Patent Office
Office européen des brevets

(11) **EP 2 326 817 B1**

(12) **FASCICULE DE BREVET EUROPEEN**

(45) Date de publication et mention de la délivrance du brevet:
**12.10.2016 Bulletin 2016/41**

(21) Numéro de dépôt: **09745904.4**

(22) Date de dépôt: **21.04.2009**

(51) Int Cl.:
*F02D 19/06* (2006.01)    *G01N 21/35* (2014.01)
*F02D 19/08* (2006.01)    *F02D 41/24* (2006.01)
*F02D 41/00* (2006.01)

(86) Numéro de dépôt international:
**PCT/FR2009/000476**

(87) Numéro de publication internationale:
**WO 2009/138585 (19.11.2009 Gazette 2009/47)**

(54) **PROCEDE D'OPTIMISATION DU FONCTIONNEMENT D'UN MOTEUR THERMIQUE PAR DETERMINATION DE LA PROPORTION DES COMPOSES OXYGENES DANS LE CARBURANT**

VERFAHREN ZUR OPTIMIERUNG DES BETRIEBS EINES VERBRENNUNGSMOTORS DURCH BESTIMMUNG DES ANTEILS VON SAUERSTOFFHALTIGEN VERBINDUNGEN IM KRAFTSTOFF

METHOD FOR OPTIMISING THE OPERATION OF A THERMAL ENGINE BY DETERMINING THE PROPORTION OF OXYGENATED COMPOUNDS IN THE FUEL

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **24.04.2008 FR 0802314**

(43) Date de publication de la demande:
**01.06.2011 Bulletin 2011/22**

(73) Titulaire: **SP3H**
**13100 Aix-en-Provence (FR)**

(72) Inventeurs:
• **LUNATI, Alain**
  **13100 Aix En Provence (FR)**
• **FOURNEL, Johan**
  **13100 Aix En Provence (FR)**

(74) Mandataire: **IP Trust**
**2, rue de Clichy**
**75009 Paris (FR)**

(56) Documents cités:
| | |
|---|---|
| WO-A-94/08226 | WO-A-2006/100377 |
| WO-A-2006/101653 | WO-A-2008/004387 |
| FR-A- 2 542 092 | FR-A- 2 888 323 |
| FR-A- 2 904 951 | US-A- 5 121 986 |
| US-A- 5 362 965 | US-B1- 6 690 015 |

**Description**

**DOMAINE TECHNIQUE DE L'INVENTION**

L'invention concerne un procédé d'optimisation du fonctionnement d'un moteur thermique.
L'invention concerne plus particulièrement les moteurs alimentés par des biocarburants.

**ÉTAT DE LA TECHNIQUE**

Les moteurs thermiques à combustion interne doivent répondre à des exigences en termes de normes d'émission de CO2, NOx, HC de plus en plus sévères et c'est pourquoi on assiste depuis quelques décennies à la montée en puissance du taux de biocarburants dans les carburants commerciaux essence et gazole comme le bioéthanol ou le biodiesel fabriqués à partir de sources multiples permettant la substitution des atomes de carbone par des atomes d'oxygène.

Les nouvelles filières d'approvisionnement utilisent des ressources renouvelables issues de l'agriculture comme le colza, le maïs, le tournesol, la canne à sucre, le soja, la cellulose ou les algues pour n'en citer que quelque uns.

Ainsi, les réflexions menées depuis plusieurs décennies tendent à prendre en compte les émissions totales du « puit à la roue » qui incluent par conséquent non seulement l'impact du moteur et de la combustion mais aussi l'impact global du carburant entre son extraction et sa production et son transport. C'est pourquoi, même si en termes de consommation, une voiture à allumage commandée aux normes Euro IV utilise un mélange en volume composé à 85% d'éthanol et à 15% essence (E85) consomme entre 30 à 40% de carburant en plus qu'une essence sans éthanol, le gain d'émission en CO2 en sortie d'échappement est réduit en moyenne de 6% mais surtout de 38% si on prend en compte la totalité du cycle du « puit à la roue ».

Les aspects « propres » de ces carburants intègrent de plus en plus la notion d'énergie renouvelable et de développement durable et l'impact sur l'approvisionnement en eau et en ressource de base alimentaire pour les populations les plus pauvres.

Selon les législations en vigueur depuis les années 80, ces biocarburants sont introduits dans les carburants traditionnels à différent taux. La tendance actuelle et les plans proposés par les Etats sont à l'augmentation significative de la part respective des biocarburants dans les carburants issus du raffinage du pétrole. C'est pourquoi, les essences reformulées américaines possèdent 10% de bioéthanol ou E10 et qu'il est possible de trouver du E26 (%éthanol=26%) ou du E100 (%éthanol >93%) au Brésil ou du E85 en Europe.

De la même manière, l'incorporation de biodiesel dans le gazole est en moyenne de 4% (B4) en Europe et la cible est de pouvoir commercialiser du B10 puis du B30 et potentiellement du B100. L'Europe, quant à elle, a privilégié l'incorporation depuis les années 1985 de quantités plus ou moins importantes de molécules de type éthers, plus précisément le MTBE, le ETBE ou le TAME, Toutefois, en Europe, on propose désormais des carburants de type E85 à la pompe.

Également, de nombreuses études réalisées depuis 2002 se penchent sur la possibilité d'introduire des alcools comme l'éthanol dans le diesel et étudient quels sont les impacts sur la combustion, la consommation et les émissions polluantes.

Cependant, l'augmentation de la teneur en biocarburant dans les essences et les gazoles n'est pas sans risque et elle est limitée par une nécessité de proposer des réglages moteurs spécifiques et des aménagements des technologies moteurs adaptées à des teneurs élevées en biocarburants sous peine de dégrader la combustion et le moteur et de générer des émissions polluantes et de $CO_2$ plus importantes qu'avec un carburant traditionnel.

Un second risque est directement lié au caractère hydrophile des alcools et à leur capacité à stoker et à emmagasiner l'eau, notamment dans le cadre d'une pollution involontaire dans le réseau de distribution, lors des opérations de stockage ou pour des raisons plus mercantiles, par des ajouts volontaires d'eau à raison de quelques pourcents en volume.

En outre, le procédé de fabrication de l'éthanol repose sur une méthode de distillation extractive conduit à un azéotrope connu comprenant 95% éthanol et 5% d'eau. Sans autre méthode séparative, il n'est donc pas possible d'obtenir un rendement en alcool supérieur à 95% d'éthanol et 5% d'eau.

L'eau contenue dans le biocarburant a comme effet d'oxyder et de corroder plus rapidement les éléments mécaniques du circuit carburant, réservoir, pompes ainsi que le système d'injection. Également, la combustion est impactée tout comme le résultat de la sonde à oxygène qui est faussé. Ce système de sonde est cependant requis dans le cadre du diagnostique OBD et permet la régulation en boucle fermée du ratio air/carburant autour de la valeur 1 afin d'optimiser le fonctionnement du catalyseur post-traitement trois voies et la régulation des émissions de CO, HC et $NO_x$ des moteurs à allumages commandés.

Aujourd'hui, afin d'optimiser le fonctionnement d'un moteur thermique alimenté par de tels carburants, les solutions proposées et retenues sont fondées sur des approches et des capteurs physiques de type conductance et conductivité ou une approche sans capteur communément appelé soft-sensor fondée sur un cycle d'apprentissage plus ou moins lent de la teneur en oxygène du mélange air-carburant à partir des résultats issus de la sonde à oxygène.

Cependant toutes les technologies présentées à ce jour ne permettent pas de distinguer l'origine de l'oxygène contenu dans le mélange air-carburant. Dès qu'il y a présence d'eau, cela provoque des erreurs très variables dans la prédiction du pourcentage d'éthanol et du pourcentage d'oxygène à partir de capteur de mesure physique de type conductance ou des non convergences dans la boucle d'apprentissage dans le cas des soft-sensors. L'impact de l'erreur de mesure du pourcentage de biocarburant peut être encore plus fort selon l'alcalinité de l'eau et à la quantité de sels dissous.

Les informations et les conclusions présentées dans le document de B. HAUET - SIA 13/03/2007 explicitent clairement les problèmes relatifs aux réglages spécifiques des moteurs à allumage piloté lors d'utilisation de mélange contenant du bioéthanol et des impacts sur les stratégies de combustion, démarrage du moteur et émission polluante en fonction de paramètre extérieur comme la température et donc de la nécessité de pouvoir connaître précisément les données relatives au biocarburant.

Egalement, le travail réalisé par le Dr CHANDRA en 1998 pour le compte du gouvernement Canadien, (direction des systèmes de transport - direction générale de la prévention de la pollution Environnement Canada) démontrent les effets de la volatilité des biocarburants sur le rendement moteur lors des phases de démarrage par temps chaud ou par temps froid ainsi que des impacts de l'appauvrissement du ratio Air/carburant notamment en boucle ouverte et des phénomènes d'à coups, également perceptible lors des accélérations en forte charge ou pleine charge du moteur et qui dégrade significativement l'agrément de conduite du véhicule. L'impact également sur la gestion de la limite cliquetis est discuté avec un effet différent du gain en octane de l'essence de base par l'adjonction de biocarburant qui impacte très significativement la Sensibilité du carburant (différence RON-MON) et donc nécessite de revoir les stratégies de contrôle du cliquetis.

Il existe donc un besoin de déterminer précisément qualitativement et quantitativement la composition de biocarburant et notamment sa composition en composants oxygénés.

L'abondance et les nombreux documents et ouvrages qui proposent depuis 25 ans des solutions relatives à la détermination de la teneur en oxygène dans les carburants montrent la nécessité et l'importance de la mesure pour l'optimisation des stratégies de démarrage, combustion et post-traitement des moteurs dits flexfuel.

Ainsi, le document US 7 163 002 traite d'une méthode pour ajuster la quantité de carburant injecté pour le fonctionnement à froid du moteur en fonction de la volatilité du carburant.

Le document US 5 893 349 propose d'utiliser une boucle d'apprentissage et une méthode pas à pas de rétro-contrôle à partir des tables de calibration du mélange air/carburant pour les opérations de démarrage à froid.

Le document US 5 492 101 propose de régler les paramètres d'un moteur à partir d'une pluralité de capteurs qui permettent de déterminer les propriétés du carburant afin de régler les paramètres d'injection du moteur. Mais aucun des capteurs n'est décrit dans le détail et il n'est pas fait mention également des contraintes relatives à la présence de biocarburant à base d'alcool et des interactions avec l'eau et la température.

Les documents US2003/00201494, US2004/0004487 et US2005/0253599 proposent une détermination indirecte de la teneur en oxygène et du pourcentage d'éthanol à partir d'un capteur carburant utilisant le principe de la variation de la mesure de la conductance/capacitance d'un mélange contenant du biocarburant et de la corrélation entre le courant d'inductance mesurée entre les électrodes du capteur et le % d'oxygène.

Le document US 2004/0253599 décrit selon un principe similaire une méthode de détermination de la teneur en oxygène d'un mélange carburant-éthanol à partir d'une mesure de température et d'impédance du mélange.

D'autres approches ont été également proposées, notamment dans le document US2005/0247299 sur la base d'un capteur d'onde acoustique permettant de déterminer la densité et la viscosité d'un carburant ou du document EP0461156 qui propose le réglage du ratio air/carburant d'un moteur à combustion interne à partir de la mesure dans la chambre de combustion du signal d'ionisation corrélable aux propriétés du carburant et notamment sa teneur en oxygène et donc en éthanol.

Le document US5435285 propose l'utilisation d'un capteur optique basé sur la mesure de l'indice de réfraction du carburant et la variation d'angle entre un carburant contenant de l'éthanol et un carburant sans éthanol.

Or, aucun de ces documents mentionnés ci-dessus, et dont les procédés ou systèmes ont déjà été mis en oeuvre pour certains, ne décrivent en aucune façon les effets des mélanges alcool-eau ou alcool-eau-esters et leurs incidences sur la mesure de la teneur en oxygène et par corrélation la teneur en alcool d'un mélange carburant-biocarburant tout comme l'impact de la variation du nombre de carbone du radical alkyl carboné associée à la liaison O-H.

Pourtant dès 1983, ITO and al. dans le document US4391253 met en avant la limitation de capteur de type conductivité/inductance dans la détermination et la prédiction de la teneur en oxygène d'un mélange alcool-carburant, à cause justement de la présence d'impureté comme l'eau qui viennent perturber de manière aléatoire et significative la transformation du courant issu de capteur en valeur correcte et précise de la teneur en éthanol. Toutefois, aucune méthode depuis lors n'a été en mesure d'offrir une solution fiable à ce problème.

En outre, ces documents ne proposent pas non plus l'utilisation d'un capteur de type spectrométrique permettant de mesurer les interactions entre une lumière et la matière notamment dans la zone de l'infrarouge ou du proche infrarouge.

Le document FR2542092 quant à lui décrit l'utilisation d'un capteur proche infrarouge dans la zone 700 nm - 1700 nm pour la détermination de la teneur en alcool d'un mélange alcool-carburant. Le document met en avant la possibilité d'utiliser deux cellules de mesure, une remplie de l'alcool de référence, le méthanol et l'autre du biocarburant à mesurer, notamment dans les zones 900-1000 nm et 1450-1600 nm.

Cependant, ce document tout comme ceux de Maggard and al. ne décrivent ni ne proposent de solutions pour corriger l'effet bien connu de la température sur les distorsions de la mesure des absorbances aux longueurs d'onde choisies d'un mélange hydrocarbure-alcool,et surtout omettent de prendre en compte les corrections spectrales et les interactions qui interviennent plus spécifiquement dans le cas d'un mélange éthanol-carburant ou méthanol-carburant en présence d'eau.

Or le caractère hydrophile de l'alcool ne peut être négligé dans le cas des biocarburants et donc limite la portée et le caractère applicatif des documents à un cadre de laboratoire mais les rendent inapplicables dans le cadre d'application embarquée et de systèmes automatisés.

En effet, les auteurs ont négligé les effets connus de dérives des longueurs d'onde caractéristiques de la liaison O-H par rapport à la théorie, sur les première et seconde ou troisième harmoniques dues aux résonances de FERMI résultant de l'interaction d'une vibration fondamentale avec une bande harmonique ou une bande de combinaison qui ont approximativement la même longueur d'onde et qui appartiennent au même groupe de symétrie ou de DARLING DENNISON provenant des interactions entre vibrations d'énergies équivalentes dans le cas de la molécule d'eau ou des interactions de CORIOLIS.

Le journal of NIR spectroscopy vol 10 n°1 ou ANALUSIS MAGAZINE, 26 n°4 1998 décrivent assez précisément les dérives des différentes longueurs d'onde des valeurs de vibration de la liaison O-H dans les zones des $1^{er}$, seconde et troisième harmoniques et la zone de combinaison notamment pour les mélanges eau-méthanol, eau-éthanol ou eau-propanol avec des variations de 0% à 100%. À 25°C, le déplacement de la longueur d'onde caractéristique par rapport à aux valeurs théoriques dépend du radical alkyle associé à la liaison O-H, du fait du phénomène connu de délocalisation du doublet électronique de l'oxygène sur les groupements $CH_3$ et $CH_2$. Les écarts par rapport à la bande attendue peuvent aller jusqu'à 5 nm et beaucoup plus en cas d'augmentation de la température.

De plus, les systèmes actuels tels que décrit ou en usage ne peuvent ainsi pas prévenir des phénomènes plus ou moins incontrôlées de démixtion du mélange carburant-biocarburant dans le cas de mélange alcool-eau dans les carburants en fonction de la température extérieure, provoquant l'apparition de 2 phases dans le réservoir et des impacts significatifs dans l'agrément de conduite du véhicule (à coup, calage, pollution ...) et l'optimisation de la phase de combustion.

WO2006100377 concerne un procédé d'optimisation du fonctionnement d'un moteur thermique dont les paramètres de combustion sont pilotés par un boîtier électronique et au moins une cartographie moteur, caractérisé en ce qu'il comporte une étape d'analyse proche infrarouge de la composition du carburant à partir d'au moins un capteur implanté dans le circuit carburant du moteur, et une étape de sélection ou de modification de ladite cartographie en fonction du résultat de ladite analyse.

Également, l'incorporation de biocarburant de type alcool comme base dans les carburants classiques favorise l'apparition de phénomènes non linéaires très pénalisant pour la volatilité des mélanges entre 5% et 20% d'alcool (E5 et E20) ainsi que dans les valeurs de distillation des 50 premiers pourcent du mélange. L'étendue des phénomènes non linéaires est aussi dépendant du type de biocarburant utilisé et d'autant plus marquée que le radical alkyl lié au groupement alcool est petit (méthanol plus impactant que l'éthanol, puis propanol et butanol). Ces phénomènes non linéaires peuvent être à l'origine de l'apparition ou non de bouchons de vapeur et avoir un impact réel sur les phases de démarrage à froid ou à chaud du moteur. De plus, aucun des capteurs décrits ou solutions n'est fonctionnel dans le cas des moteurs thermiques à auto-allumage de type diesel.

Ainsi, une des limites aujourd'hui dans l'augmentation de l'incorporation de biocarburants dans les carburants classiques provient par conséquent de l'impossibilité des solutions existantes de mesurer avec précision et robustesse dans tous les cas de figures imaginables la teneur en composés oxygénés et notamment la capacité de détecter la présence d'eau dans le biocarburant et donc de pouvoir proposer des réglages du moteur adaptés à toutes les valeurs possibles de mélange entre 0% et 100% de biocarburants en fonction de la température du produit.

## OBJET DE L'INVENTION

L'invention vise à remédier à ces problèmes en proposant un procédé d'optimisation d'un moteur thermique alimenté par un biocarburant dans lequel ledit biocarburant est précisément analysé afin de proposer les réglages du moteur les mieux adaptés au carburant.

À cet effet, l'invention concerne un procédé d'optimisation du fonctionnement d'un moteur thermique dont les paramètres de combustion sont pilotés par un boîtier électronique et au moins une cartographie moteur, comportant :

- une étape d'analyse spectroscopique par proche infrarouge d'un biocarburant comprenant un mélange d'alcools et/ou d'éthers et/ou d'eau et de détermination de la proportion d'eau et d'au moins un autre composé oxygéné, du type alcools et/ou éthers contenue dans le biocarburant ; et
- une étape de sélection et/ou de modification de ladite cartographie en fonction du résultat de l'étape d'analyse et de détermination pour optimiser le fonctionnement du moteur thermique.

Ainsi, selon l'invention, la teneur en eau dans le biocarburant est déterminée et prise en compte pour la sélection et/ou la modification de la cartographie moteur afin d'optimiser le fonctionnement du moteur thermique.

En outre, la connaissance de la teneur en eau permet de déterminer de manière plus précise les proportions des autres composés oxygénés tels que l'alcool et l'éther contenus dans le biocarburant afin de régler au mieux le moteur.

Une telle analyse permet au système électronique ou numérique de régler au mieux et en temps réel, les paramètres, lois et cartographie d'injection de combustion et de post traitement du moteur en fonction des résultats mesurés, notamment les paramètres relatifs à l'injection, au réglage de la richesse du mélange air-carburant et de la gestion du post-traitement ainsi que de la validation de la sortie de la sonde à oxygène.

Ainsi, l'invention répond au besoin de détermination de la mesure qualitative et quantitative pertinentes et précises du biocarburant, et notamment la nécessité de procéder à une étape d'analyse du pourcentage de ses composants oxygénés, constitué d'un mélange d'alcools-eau et/ou éthers et d'un carburant de base en fonction du type et de la quantité d'alcool et/ou d'éthers et/ou d'eau et du type du carburant de base et d'une correction de ladite analyse en fonction de la température du biocarburant et une étape de sélection ou de modification de ladite cartographie en fonction du résultat de ladite analyse.

Le procédé selon l'invention répond aux problématiques de mesurer directement dans le biocarburant la teneur en oxygène et plus précisément de déterminer la teneur et le type d'alcools, la teneur en eau, la teneur en composés éthers comme le MTBE et l'ETBE dans les biocarburants essence et diesel en prenant en compte et en corrigeant les effets des différentes interactions moléculaires et l'effet de la température.

À partir de ces informations, il est possible de corriger et de prédire les propriétés physico-chimiques du biocarburant notamment sa masse volumique, ses indices de combustion comme les indices d'octane moteur et recherche ou de cétane, sa courbe de distillation, sa volatilité ou pression de vapeur ou l'indice d'agrément de conduite (driveability index) ou le ratio V/L ou ses caractéristiques à froid.

Avantageusement, on sélectionne et/ou on modifie la cartographie afin d'optimiser la consommation de carburant et limiter les émissions dans les gaz d'échappement à iso performance du moteur ou pour augmenter les performances du moteur à iso consommation et émissions.

Avantageusement, l'étape d'analyse par proche infrarouge du biocarburant comporte une phase de correction en fonction des multiples recouvrements de bandes caractéristiques associées à des liaisons des atomes d'oxygènes présents dans le biocarburant et notamment des liaisons R-O-H présentes dans les alcools primaires et/ou aux liaisons C-O-C présentes dans les esters et/ou aux liaisons H-O-H présentes dans la molécule d'eau.

Avantageusement, l'étape d'analyse par proche infrarouge comporte une phase de correction en fonction des interactions sur les zones d'harmoniques ou de combinaison dues aux phénomènes parasites de résonances d'interactions ou de couplage.

Avantageusement, l'étape d'analyse par proche infrarouge comporte une phase de correction en fonction de la structure moléculaire et notamment du nombre et du type de liaison C-C et C-H provenant de ladite base carburant issu du procédé de raffinage du pétrole brut.

Avantageusement, l'étape d'analyse par proche infrarouge comporte une phase de correction de ladite analyse en fonction de la mesure de la température du biocarburant à partir d'un capteur au moins de température.

De préférence, l'analyse proche infrarouge de la composition du biocarburant permet de procéder à une phase de correction des prédictions des propriétés physico-chimiques dudit biocarburant.

Avantageusement, l'analyse spectroscopique par proche infrarouge est effectuée par un capteur effectuant des mesures dans les régions spectrales comprises entre 780 nm et 2500nm, de préférence dans la zone de détection du silicium entre 850 et 980 nm.

D'autres objets et avantages de l'invention apparaîtront au cours de la description qui suit, faite en référence aux dessins annexés.

## BRÈVE DESCRIPTION DES FIGURES

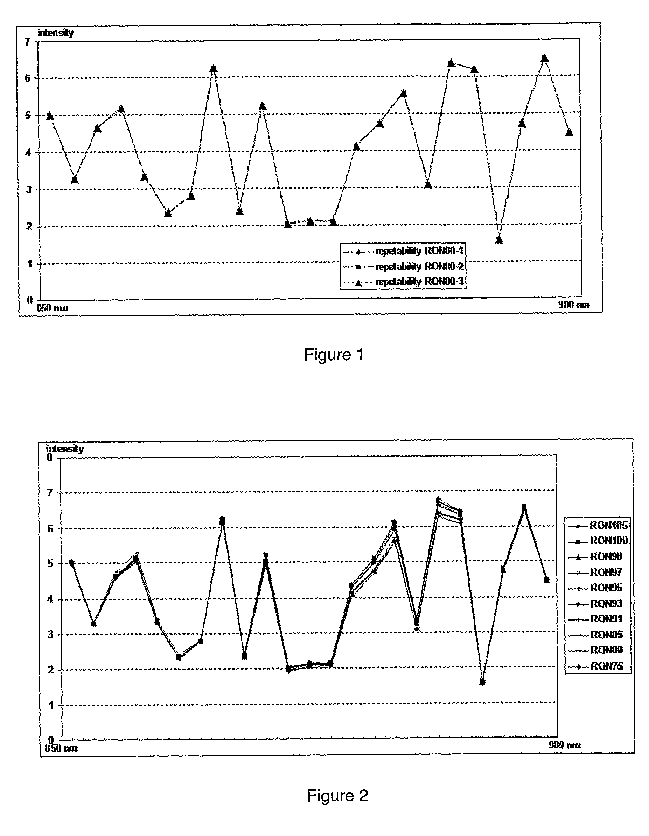

Les figures 1 à 7 montrent les différents effets non linéaires sur l'intensité de la mesure spectrale selon les longueurs d'onde considérées dans la zone 850-980nm par l'ajout combiné ou non de composés oxygénés de type ethers, et/ou eau et/ou alcools et/ou de la température.

  ◦ La figure 1 montre la très bonne répétabilité spectrale d'un spectre proche infrarouge mesuré en intensité dans la zone 850-980nm d'un carburant de type essence caractérisé par un indice d'octane recherche de 80 points.

◦ La figure 2 montre la variabilité et de l'effet non linéaire de la variation de l'indice d'octane recherche de carburants de type essence entre 75 points à 105 points d'octane sur les spectres proche infrarouge mesuré en intensité dans la zone 850-980nm.

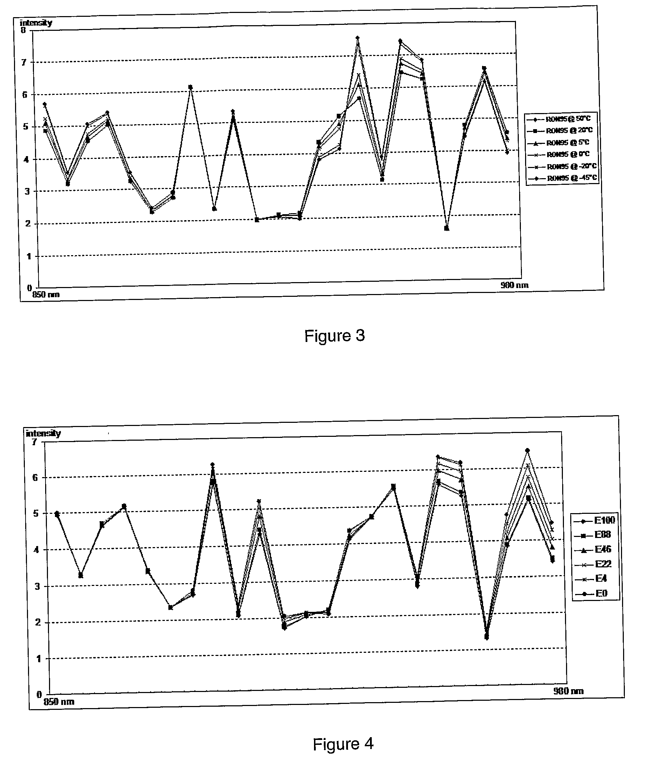

◦ La figure 3 montre l'impact de l'effet non linéaire de la température sur le spectre proche infrarouge en intensité mesuré dans la zone 850-980nm d'un carburant entre -45° et +50°C

◦ La figure 4 montre l'impact de l'effet non linéaire de l'ajout d'éthanol anhydre dans un produit d'indice d'octane recherche de 80 points entre 0% et 100% sur le spectre proche infrarouge en intensité mesuré dans la zone 850-980nm.

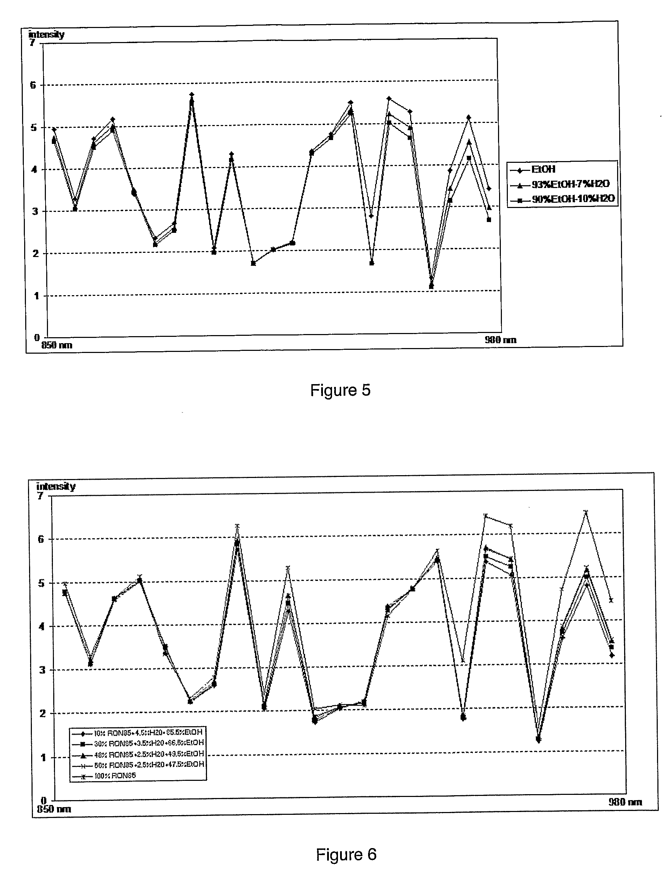

◦ La figure 5 montre l'impact de l'effet non linéaire de l'ajout d'eau dans l'éthanol anhydre à 7% et à 10% sur le spectre proche infrarouge en intensité mesuré dans la zone 850-980nm.

◦ La figure 6 montre l'impact de l'effet non linéaire de l'ajout conjoint d'eau et d'éthanol dans un d'un carburant de type essence caractérisé par un indice d'octane recherche de 85 points sur le spectre proche infrarouge en intensité mesuré dans la zone 850-980nm.

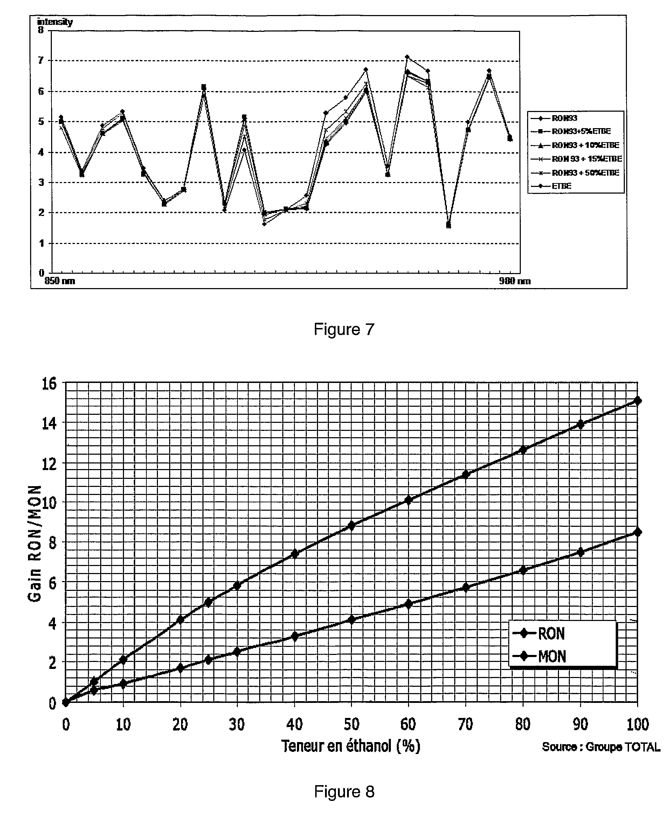

◦ La figure 7 montre l'impact non linéaire de l'ajout de l'ester ETBE sur le spectre proche infrarouge en intensité mesuré dans la zone 850-980nm d'un carburant de type essence d'indice d'octane recherche de 93.

Les figures 8 à 12 montrent l'impact non linéaire et les interactions croisées de l'ajout de produits oxygénés sur les propriétés physico-chimiques des carburants tel que les indices d'octane, la courbe de distillation et la pression de vapeur ; propriétés déterminantes dans l'optimisation des démarrages à froid et à chaud des véhicules ainsi que dans l'optimisation de la combustion et de la limite cliquetis et dans le post-traitement.

◦ La figure 8 montre l'impact non linéaire de l'ajout d'éthanol en % volume sur l'indice d'octane recherche et l'indice d'octane moteur d'un carburant de type essence.

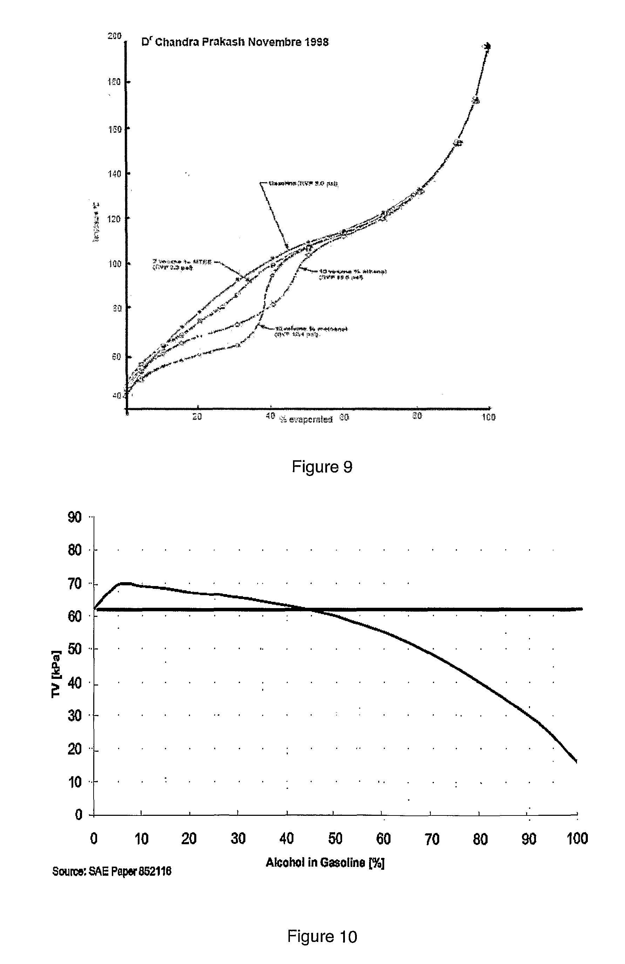

◦ La figure 9 montre la visualisation l'azéotrope de l'ajout de 10% volume d'éthanol, de 10% volume de méthanol et de 7% volume de MTBE sur la courbe de distillation en degré Celsius selon la méthode ASTM D86 d'un produit pétrolier de type essence.

◦ La figure 10 montre l'impact non linéaire de l'ajout d'éthanol en % volume sur la tension de vapeur Reid d'un produit pétrolier en KPa.

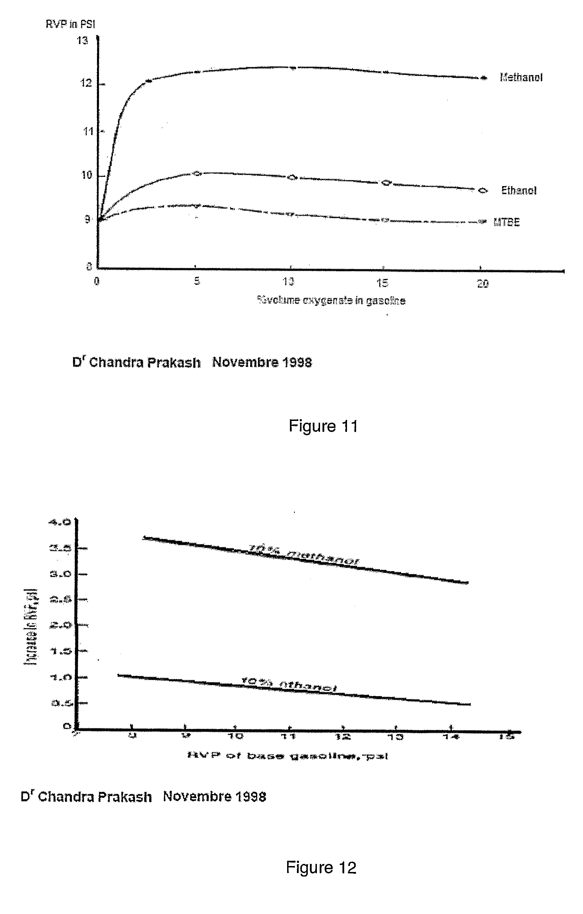

◦ La figure 11 montre la variabilité selon l'origine du composé oxygéné et l'impact non linéaire de l'ajout de MTBE, Ethanol et Méthanol sur la mesure de la tension de vapeur Reid en PSI

◦ La figure 12 montre l'impact de la valeur de départ de la tension de vapeur Reid en PSI du carburant sur le gain de la tension de vapeur finale du mélange carburant-éthanol ou carburant-méthanol à 10% en volume.

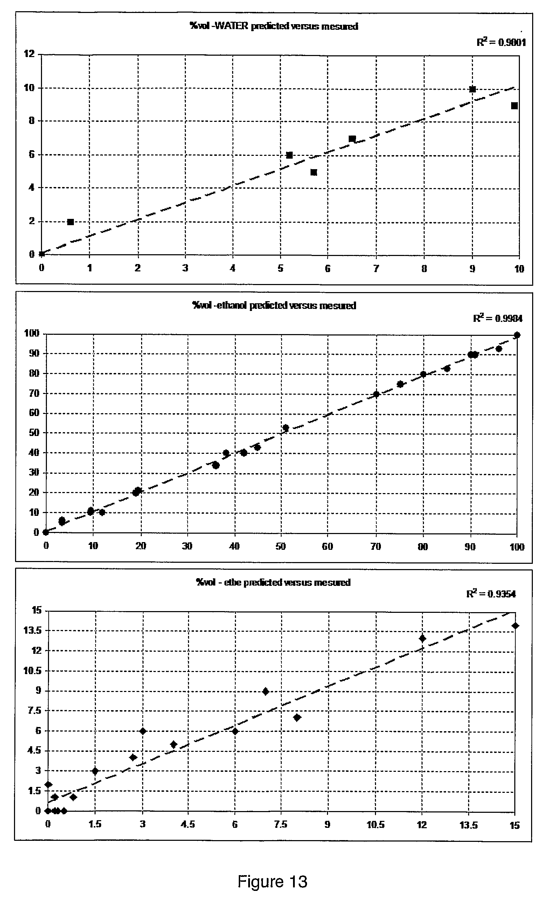

◦ La figure 13 montre les graphiques des résultats des modèles en prédiction sur des échantillons n'appartenant pas à la base de données sur les pourcentages calculés par rapport aux données réelles sur l'eau, l'éthanol et l'etbe.

## EXEMPLE DE RÉALISATION

L'invention concerne un procédé d'optimisation d'un moteur thermique dont les paramètres, lois et cartographies d'injection, de combustion et de post traitement sont pilotés par un système électronique ou numérique.

Lors du procédé, on réalise une étape d'analyse et de reconnaissance de la teneur en composées oxygénées notamment des structures et des fonctions de type eau, et alcool et/ou éthers du biocarburant pertinentes pour le couple carburant-moteur.

L'analyse est réalisée à partir d'au moins un capteur implanté dans le circuit carburant du moteur comprenant le système de remplissage, le réservoir, les pompes, les filtres à carburant, le circuit d'alimentation du moteur et le circuit retour vers le réservoir.

Le procédé comprend en outre une étape de sélection ou de modification des paramètres, lois ou cartographies en fonction du résultat de ladite analyse.

Selon une réalisation, l'étape d'analyse pertinente du biocarburant comprend une étape de mesure de la température du produit à partir d'un capteur au moins de température de type thermocouple et une étape d'analyse spectroscopique de la structure moléculaire des hydrocarbures composant le carburant pour la reconnaissance des liaisons moléculaires carbone-oxygène ou oxygène-hydrogène en fonction de leur groupements chimiques d'origine notamment de type alcools et/ou eau et/ou éthers et leur quantification respective en pourcent masse ou pourcent volume en fonction de la température du mélange et des interactions intramoléculaires.

En effet, même s'il est souhaitable et possible de stabiliser la température du biocarburant lors de l'analyse spectroscopique dans une plage de température limitée, il est nécessaire de contrôler donc de mesurer cette température afin de corriger si besoin les résultats de l'analyse.

Selon une réalisation particulière, l'analyse spectroscopique consiste en une analyse proche infrarouge du carburant. Le proche infrarouge est particulièrement bien adapté à l'analyse de la structure moléculaire car c'est une méthode très sensible, le spectre proche infrarouge pouvant être considéré comme « l'ADN » du produit. La structure moléculaire extraite de ce spectre offre une grande richesse pour le contrôle moteur. De plus, le proche infrarouge est particulièrement répétable. Il est connu que la prédiction par méthode spectroscopique de type proche infrarouge nécessite au préalable de constituer une base de données de calibration suffisamment pertinente, permettant de déterminer les meilleurs modèles et les zones de corrélations entre les différentes fonctions et groupements R-OH (alcool primaire), C-O-C (éther), H-O-H (eau), le spectre proche infrarouge en fonction de la température. La base de données doit faire intervenir les éléments relatifs ou non des constituants, à leur pourcentage dans le mélange, leur spectre proche infrarouge, la température de l'échantillon à l'instant de la mesure, à toutes les données physico-chimiques des mélanges ou aux produits purs, au comptage en pourcent volume, pourcent poids, ou toute pondération possible comme les énergies, enthalpies ou les longueurs des liaisons atomiques du nombre de carbone, hydrogène et oxygène ou des liaisons C-H, C-O, O-H en valeur absolue ou en ratio des uns par rapport aux autres.

Dans le mode de réalisation avec ou sans stabilisation de la température lors de la mesure du spectre proche infrarouge, le protocole de préparation de la base de données permettant de déterminer la teneur en oxygène relative à l'incorporation d'alcool de type primaire, d'eau et d'esters de type ETBE et MTBE est le suivant :

On procède à une étape de sélection d'une vingtaine au moins de carburants ou bases à carburant non oxygénés noté $C_{(i)}$ (i variant de 1 à n) réels issus du monde entier ou de proto-fuels, couvrant une plage de variation d'octane moteur de RON75 à RON105 et une plage de tension de vapeur de 25 à 100 KPa et différents niveaux de ratio C/H et de liaison C-C de type sigma ou pi.

Les spectres proche infrarouge en absorbance ou en intensité de ces produits notés $S_{C(i,t)}$ sont mesurés à partir d'un ordre défini par tirage aléatoire sur une plage de température t pouvant aller de -50°C à 150°C.

On procède dans un second temps à un tirage aléatoire pour définir l'ordre et la préparation des mélanges d'alcool notés $A_{(j)}$ (j variant de 1 à m), préférentiellement des alcools primaires possédant de 1 à 4 atomes de carbones. Les mélanges peuvent faire intervenir 1, 2, 3 ou 4 alcools à la fois avec des ratios minimum de 5% en mélange, préférentiellement 20%. On privilégie dans la base le nombre d'échantillon utilisant de l'éthanol. On mesure alors le spectre proche infrarouge des alcools notés $S_{A(j)}$.

On procède dans une troisième étape à un tirage aléatoire pour définir l'ordre à la préparation des mélanges d'éthers ETBE et MTBE notés $E_{(k)}$ (k variant de 1 à p). On mesure alors le spectre proche infrarouge des éthers notés $S_{E(k)}$.

On effectue dans une quatrième étape la préparation des biocarburants notés $M_{(i,i,k)}$ en procédant à un tirage aléatoire pour définir l'ordre, à partir d'une certaine quantité de bases $C_i$ et des alcools $A_j$ et des éthers $E_{(k)}$. La quantité finale d'alcool permet de couvrir la plage 0 à 100% (E0 à E100) et la quantité d'éthers de 0% à 50%.

On mesure le spectre des biocarburants $M_{(i,j,k)}$ en procédant à un tirage aléatoire pour définir l'ordre en faisant varier la température t de l'échantillon sur la plage de température définies pour obtenir les spectres en absorbances ou en intensité $S_{M(i,j,k,t)}$

On procède dans une quatrième étape à un tirage aléatoire pour définir l'ordre à l'ajout d'eau dans les biocarburants de second niveau notés $MO_{(i,j,k,t)}$ constitués lors de l'étape précédente avec des pourcentages variables en fonction de la teneur en alcool du mélange et en fonction de la température des biocarburants sur la plage définie pour éviter les phénomènes de démixtion Le pourcentage d'eau dans le mélange final peut varier de 0% à 10%. On mesure alors de la même méthode les spectres proche infrarouges en absorbances ou en intensité sur la même plage de variation de température $S_{MO(i,j,k,t)}$.

Tous les échantillons sont préparés au minimum 3 fois et les spectres proches infrarouges des échantillons sont mesurés 20 fois sur une période de temps de 3 semaines. Le conditionnement des produits se fait en chambre froide ou en armoires réfrigérées pour éviter tout phénomène d'évaporation. Les analyses physico-chimiques des produits C,A,M et MO sont également mesurés à 3 reprises sur 3 échantillons différents.

Comme le montre les figures de 1 à 7, les interactions et les effets se combinent et/ou se superposent sur l'ensemble du spectre, par conséquent, il est nécessaire de pouvoir extraire chaque effet considéré indépendamment les uns des autres. Pour cela il faut mathématiquement déterminer les zones de longueurs d'onde les plus pertinentes par ordre de priorité en fonction de leur corrélation avec:

◦ Aucun effet, la longueur d'onde ou les longueurs d'ondes ou la meilleure combinaison des longueurs d'onde qui ont des valeurs d'intensité invariable et noté B_0 et peut ou peuvent être considérées comme point(s) levier(s) ou ligne de base.
◦ un effet et un seul comme [température], [type d'alcool], [%(liaison HO-H )], [%(liaison R-O-H)], [%(liaison C-O-C)]...
◦ des effets 2 à 2, par exemple [T°,%(liaison H-O-H)], [%(liaison H-O-H ),%(liaison R-O-H)], [%(liaison R-O-H),%(liaison C-O-C)], [%(liaison C-O-C), type base carburants], [type base carburant, T°]...
◦ des effets 3 à 3, par exemple [%(liaison H-O-H), %(liaison R-O-H), type alcool], [T°, type base carburant, %(liaison C-O-C)]...

Ainsi, lors de l'étape de construction de la base de données, il est possible d'utiliser des méthodes basées sur les plans d'expériences et plans de mélanges, afin de réduire la taille de la base de données et le nombre de mesure à effectuer et mesurer directement et principalement l'impact des interactions principales, de premier et de second ordre. Les méthodes multifactorielles de type analyse factorielle discriminante en composante principale peuvent être aussi utilisées. Il est fortement conseillé cependant d'appliquer des modèles de connaissances empiriques basés sur la théorie, la veille documentaire et validés rigoureusement par l'expérience.

À partir d'une base de données bien construite, il est donc possible d'extraire les corrélations les plus significatives entre les intensités et absorbances du spectre en fonction des longueurs d'onde et de la température et les paramètres comme la teneur en eau, la teneur en alcool, le type d'alcool, la teneur en esters. Les modèles de corrélations peuvent être linéaires ou non linéaires.

Dans un mode de réalisation particulier, on décrit une méthode de calcul pour la détermination des différentes grandeurs recherchées dans la zone de détection du silicium entre [780-1100nm] et plus précisément [850-980nm].

Dans une première étape, on mesure alors la teneur globale en composé oxygéné du mélange notée P_Ox. Il est possible d'appliquer une correction mathématique de la valeur en fonction de la température du produit. La mesure en composés oxygénés est effectuée autour de la mesure de l'intensité spectrale ou la valeur d'absorbance maximum entre 950 et 980 nm plus précisément centrée autour de 970 nm et de 962 nm ou de la meilleure combinaison possible des longueurs d'ondes dans la plage [950-980nm] jouant le rôle de fonction de lissage pondéré par la valeur du point levier B_0.

On détermine dans une seconde étape alors la valeur de la teneur en eau (liaison H-O-H) notée P_$H_2$O en effectuant une mesure de l'intensité du signal ou des valeurs d'absorbances entre 900 et 910 nm plus précisément centrée autour de la valeur 905 nm ou de la meilleure combinaison possible des longueurs d'ondes dans la plage [900-910nm] jouant le rôle de fonction de lissage en appliquant une correction mathématique de la valeur en fonction de la température du produit pondéré par la valeur du point levier B_0.

On détermine dans une troisième étape la teneur en composé oxygéné de type éthers (liaison C-O-C) notée P_ETHER en effectuant une mesure de l'intensité du signal ou des valeurs d'absorbances entre 890 et 910 nm plus précisément centrée autour de la valeur 900 nm et ou des valeurs d'absorbances entre 910 et 920 nm plus précisément centrée autour de la valeur 915 nm ou de la meilleure combinaison possible jouant le rôle de fonction de lissage des longueurs d'ondes dans la plage [890-910nm] et de la plage [910-920nm] en appliquant une correction mathématique de la valeur en fonction de la température du produit pondéré par la valeur du point levier B_0.

L'arrangement des 3 étapes n'est pas crucial et les étapes peuvent se faire dans n'importe quel ordre.

Dans ce mode de calcul particulier où le cas de la température est traité dans chaque sous-calcul, le pourcentage en alcool noté P_OL est déterminé par l'équation suivante :

$$P\_OL = rP\_Ox - a\ P\_H_2O - b\ P\_ETHER\ avec\ (a,b,r)\ constantes$$

  ∘ a et b étant des coefficients de correction des valeurs d'absorbances ou d'intensité spectrale proportionnelle respectivement aux nombres de liaisons HO-H et C-O-C qui interagissent dans la zone de P_Ox entre [950-980nm].
  ∘ r étant un coefficient de correction de la teneur oxygène du mélange par rapport à la structure moléculaire de la base essence faisant intervenir le nombre de liaisons de type aromatiques, iso-paraffines, paraffines, oléfiniques, naphténiques en fonction du spectre [850nm-980nm] et notamment la zone [900-920nm] plus précisément centrée autour de la valeur 910 nm ou de la meilleure combinaison possible des longueurs d'ondes dans la plage [900-920nm] ramenée à la valeur du point levier B_0.

Les différentes fonctions dites de lissage autour du pic maximum dans chacune des zones considérées permettent de minimiser les effets de dérives dues aux résonnances de FERMI, de DARLING DENNISON ou des interactions de CORIOLIS.

Tout autres modes de calcul faisant intervenir les mêmes groupements ou combinaison de longueurs d'ondes mais recombinés en ratio ou par l'utilisation d'une ou plusieurs méthodes linéaires ou non linéaires, probabilistes, topologiques ou réseau de neurone peuvent être envisagées. La correction du facteur de température peut également intervenir dans le calcul final de P_OL en décrivant P_OL comme une fonction de la température. Ces modes de calcul peuvent faire intervenir des changements de variables (PLS, PCR...) ou des fonctions mathématiques faisant intervenir des développements limités ou des dérivés de différents ordres ou formules utilisant des bases de trigonométries tel que les Log, Log10, sinus, cosinus ou tangente ou les mesures d'arc associés.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Procédé d'optimisation du fonctionnement d'un moteur thermique dont les paramètres de combustion sont pilotés par un boîtier électronique et au moins une cartographie moteur comprenant :

   - une première étape d'analyse spectroscopique par proche infrarouge d'un biocarburant comprenant un mélange d'alcools et/ou d'éthers et d'eau ; et
   - une seconde étape de sélection et/ou de modification de ladite cartographie,

   **caractérisé en ce que**
   ladite première étape comporte une phase de correction en fonction des multiples recouvrements de bandes caractéristiques associées à des liaisons des atomes d'oxygènes présents dans le biocarburant pour une détermination de la proportion d'eau et d'au moins un autre composé oxygéné, du type alcools et/ou éthers contenues dans le biocarburant ; et ladite seconde étape est en fonction du résultat de ladite étape d'analyse et de détermination pour optimiser le fonctionnement du moteur thermique, lesdites liaisons des atomes d'oxygènes comprenant les liaisons R-O-H présentes dans les alcools primaires et/ou les liaisons C-O-C présentes dans les esters et les liaisons H-O-H présentes dans la molécules d'eau,
   ladite première étape d'analyse par proche infrarouge comporte une phase de correction de ladite analyse en fonction de la mesure de la température du biocarburant à partir d'un capteur au moins de température.

2. Procédé d'optimisation selon la revendication 1, **caractérisé en ce qu'**on sélectionne et/ou on modifie la cartographie afin d'optimiser la consommation de carburant et limiter les émissions dans les gaz d'échappement à iso performance du moteur ou pour augmenter les performances du moteur à iso consommation et émissions.

3. Procédé selon l'une quelconque des revendications 1 à 2, **caractérisé en ce que** l'étape d'analyse par proche infrarouge comporte une phase de correction en fonction des interactions sur les zones d'harmoniques ou de combinaison dues aux phénomènes parasites de résonnances d'interactions ou de couplage.

4. Procédé selon l'une quelconque des revendications 1 à 3, **caractérisé en ce que** l'étape d'analyse par proche infrarouge comporte une phase de correction en fonction de la structure moléculaire et notamment du nombre et du type de liaison C-C et C-H provenant de ladite base carburant issu du procédé de raffinage du pétrole brut.

5. Procédé selon l'une quelconque des revendications 1 à 4, **caractérisé en ce que** ladite analyse proche infrarouge de la composition du biocarburant permet de procéder à une phase de correction des prédictions des propriétés physico-chimiques dudit biocarburant.

6. Procédé selon l'une des revendications 1 à 5, **caractérisé en ce que** l'analyse spectroscopique par proche infrarouge est effectuée par un capteur effectuant des mesures dans les régions spectrales comprises entre 780 nm et 2500 nm, de préférence dans la zone de détection du silicium entre 850 et 980 nm.

## Patentansprüche

1. Verfahren zur Optimierung des Betriebs eines Verbrennungsmotors, dessen Verbrennungsparameter über eine elektronische Steuerung und mindestens ein Motormapping gesteuert werden, welches folgendes umfasst:

   - einen ersten Schritt der spektroskopischen Nah-Infrarot-Analyse eines Biokraftstoffes, welcher eine Mischung aus Alkohol und/oder Ether und Wasser enthält; und
   - einen zweiten Schritt, bestehend aus der Auswahl und/oder Änderung besagten Mappings,

   **dadurch gekennzeichnet, dass**
   besagter erster Schritt eine Phase der Korrektur entsprechend den zahlreichen Überlappungen von charakteristischen Banden umfasst, die mit den Bindungen der im Biokraftstoff enthaltenen Sauerstoffatome zwecks Bestimmung des Anteils von Wasser und mindestens einer anderen sauerstoffhaltigen Verbindung, dem im Biokraftstoff enthalten Alkohol und/oder Ether, assoziiert sind. Besagter zweiter Schritt hängt vom Ergebnis des Analyse- und Bestimmungsschritts ab, um den Betrieb des Verbrennungsmotors optimieren zu können, wobei besagte Sauerstoffatombindungen die in primärem Alkohol enthaltenen Bindungen R-O-H und/oder die in Ester enthaltenen Bindungen C-O-C, sowie die in Wassermolekülen enthaltenen Bindungen H-O-H enthalten,
wobei besagter erster Schritt der Nah-Infrarot-Analyse eine Phase der Korrektur besagter Analyse im Hinblick auf die Messung der Biokraftstofftemperatur mit einem Fühler, der zumindest die Temperatur misst, umfasst.

**2.** Optimierungsverfahren nach Anspruch 1, **dadurch gekennzeichnet, dass** man das Mapping auswählt und/oder ändert, um den Kraftstoffverbrauch zu optimieren und die Emissionen in den Abgasen bei gleicher Motorleistung zu beschränken oder die Motorleistungen bei gleichem Verbrauch und gleichen Emissionen zu steigern.

**3.** Verfahren nach einem der Ansprüche 1 bis 2, **dadurch gekennzeichnet, dass** der Schritt der Nah-Infrarot-Analyse eine Korrekturphase unter Berücksichtigung der Wechselwirkungen in den Bereichen der Oberschwingungen oder unter Berücksichtigung von Kombinationen umfasst, die auf parasitäre Resonanzphänomene von Wechselwirkungen oder Kopplung zurück zu führen sind.

**4.** Verfahren nach einem der Ansprüche 1 bis 3, **dadurch gekennzeichnet, dass** der Schritt der Nah-Infrarot-Analyse eine Korrekturphase unter Berücksichtigung des molekularen Aufbaus und insbesondere der Anzahl und des Typs von C-C- und C-H-Bindungen umfasst, der auf die besagte, vom Rohöl-Raffinerieverfahren stammende Kraftstoffzusammensetzung zurück geht.

**5.** Verfahren nach einem der Ansprüche 1 bis 4, **dadurch gekennzeichnet, dass** besagte Nah-Infrarot-Analyse der Biokraftstoffzusammensetzung eine Phase der Korrektur der Vorausberechnungen der physikalischchemischen Eigenschaften besagten Biokraftstoffs umfasst.

**6.** Verfahren nach einem der Ansprüche 1 bis 5, **dadurch gekennzeichnet, dass** die spektroskopische Nah-Infrarot-Analyse mit Hilfe eines Sensors erfolgt, der Messungen in den Spektralbereichen zwischen 780 nm und 2500 nm, vorzugsweise im Detektionsbereich von Silizium, zwischen 850 und 980 durchführt.

## Claims

**1.** A method for optimising the functioning of a heat engine, the combustion parameters of which are controlled by an electronic box and at least one engine mapping, comprising:

- a first step of the near-infrared spectroscopic analysis of a biofuel comprising a mixture of alcohols and/or ethers and water;
- a second step of selecting and/or modifying said mapping,

**characterised in that**
said first step comprises a correction phase according to the multiple overlaps of characteristic bands associated with bonds of the oxygen atoms present in the biofuel for determining the proportion of water and at least one other oxygenated compound, of the alcohol and/or ether type, contained in the biofuel; and said second step depends on the result of said analysis and determination step for optimising the functioning of the heat engine, said bonds of the oxygen atoms comprising the R-O-H bonds present in primary alcohols and/or the C-O-C bonds present in esters and the H-O-H bonds present in water molecules,
said first near-infrared analysis step comprises a phase of correcting said analysis according the measurement of the temperature of the biofuel using a sensor for at least temperature.

**2.** An optimisation method according to claim 1, **characterised in that** the mapping is selected and/or modified in order to optimise the fuel consumption and to limit emissions in the exhaust gasses for equal performance of the engine or to increase the performance of the engine for equal consumption and emissions.

**3.** A method according to either one of claims 1 and 2, **characterised in that** the near-infrared analysis step comprises a correction phase according to interactions on the harmonics or combination zones due to the parasitic phenomena of coupling or interaction resonances.

**4.** A method according to any one of claims 1 to 3, **characterised in that** the near-infrared analysis step comprises a correction phase according to the molecular structure and in particular the number and type of C-C and C-H bonds coming from said fuel base issuing from the method refining the crude oil.

5. A method according to any one of claims 1 to 4, **characterised in that** said near-infrared analysis of the composition of the biofuel makes it possible to proceed with a phase of correcting the predictions on the physical and chemical properties of said biofuel.

6. A method according to one of claims 1 to 5, **characterised in that** the near-infrared spectroscopic analysis is carried out by a sensor making measurements in the spectral regions between 780 nm and 2500 nm, preferably in the silicon detection zone between 850 and 980 nm.

Figure 1

Figure 2

Figure 3

Figure 4

Figure 5

Figure 6

Figure 7

Figure 8

Figure 9

Figure 10

Dʳ Chandra Prakash   Novembre 1998

Figure 11

Dʳ Chandra Prakash   Novembre 1998

Figure 12

Figure 13

EP 2 326 817 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7163002 B
- US 5893349 A
- US 5492101 A
- US 200300201494 A
- US 20040004487 A
- US 20050253599 A
- US 20040253599 A
- US 20050247299 A
- EP 0461156 A
- US 5435285 A
- US 4391253 A
- FR 2542092
- WO 2006100377 A